# EUROPÄISCHE PATENTANMELDUNG

(11) **EP 0 719 067 A2**
(43) Veröffentlichungstag der Anmeldung: **26.06.1996**
(21) Anmeldenummer: 95203491.6
(22) Anmeldetag: 14.12.1995
(51) Int. Cl.: H04Q 11/04, H04L 12/56

(54) **Übertragungssystem**

(30) Priorität: 23.12.1994 DE 4446248
(71) Anmelder: Philips Patentverwaltung GmbH, 22335 Hamburg (DE); Philips Electronics N.V., 5621 BA Eindhoven (NL)
(72) Erfinder: Nagel, Peter, Dr.-Ing., Röntgenstrasse 24, D-22335 Hamburg (DE); Keller, Hans-Georg, Röntgenstrasse 24, D-22335 Hamburg (DE)
(74) Vertreter: Volmer, Georg, Dipl.-Ing.

(57) **Zusammenfassung**

Die Erfindung bezieht sich auf ein Übertragungssystem mit mehreren Netzknoten, die jeweils zum Empfang und zur Sendung von Paketen mit verbindungsbezogenen Zustandsinformationen des Übertragungssystems vorgesehen sind. Ein Netzknoten enthält wenigstens eine Auswertevorrichtung (8), die zur Abspeicherung von den aus einem Paket entnommenen Zustandsinformationen in eine Tabelle (14) vorgesehen ist. Außerdem ist die Auswertevorrichtung unabhängig von der Reihenfolge der empfangenen Pakete zur Ermittlung von aktuellen, verbindungsbezogenen Zuständen nach einer vorgegebenen Reihenfolge für jede Verbindung aus den ebenfalls in der Tabelle (14) gespeicherten, bisher ermittelten Zuständen und den empfangenen, verbindungsbezogenen Zustandsinformationen vorgesehen.

## Beschreibung

Die Erfindung bezieht sich auf ein Übertragungssystem mit mehreren Netzknoten, die jeweils zum Empfang und zur Sendung von Paketen mit verbindungsbezogenen Zustandsinformationen des Übertragungssystems vorgesehen sind.

Ein solches Übertragungssystem mit mehreren Netzknoten ist aus dem Buch "ATM - Die Technik des Breitband-ISDN" von Gerd Siegmund, R. v. Decker's Verlag, G. Schenck, Heidelberg, 1993, Seite 133 bis 137 bekannt. Solche Netzknoten können z.B. Vermittlungsstellen, Cross-Connects oder Zwischenregeneratoren sein. Daten oder Informationen zwischen den Netzknoten werden dabei mit Paketen fester Länge (Zellen) nach dem asynchronen Transfermodus übertragen. Die Pakete oder Zellen können dabei noch in einem synchronen Transportmodul (STM) transportiert werden, welches Teil eines Signals nach dem Standard der synchronen digitalen Hierachie (SDH) oder nach dem Standard des synchronen optischen Netzes (SONET) ist. Eine Zelle besteht aus einem 5 Byte langen Steuerinformationen enthaltenden Kopffeld und einem 48 Byte langen Informationsfeld. Die Steuerinformation im Kopffeld einer Zelle enthält eine virtuelle Pfadkennung VPI (virtual path identifier), die einen virtuellen Pfad (VP-Verbindung) angibt, und eine virtuelle Verbindungskennung VCI (virtual connection identifier) innerhalb eines virtuellen Pfades, die eine VC-Verbindung (virtual connection) angibt. Mehrere VC-Verbindungen werden zu einem virtuellen Pfad (virtual path) zusammengefügt.

Zur Sicherstellung des Betriebes, der Signalisierung von Fehlerzuständen und dem Transport von Monitor-Informationen (z.B. bezüglich der Verfügbarkeit und der Leistungsfähigkeit des Systems) werden Zellen mit OAM-Informationen (OAM-Zellen) im Informationsfeld der Zelle zwischen den Netzknoten ausgetauscht (OAM = operation and maintenance). Wie solche OAM-Zellen in einem Netzknoten ausgewertet werden, ist aus dem oben genannten Buch nicht bekannt.

Daher liegt der Erfindung die Aufgabe zugrunde, ein Übertragungssystem mit mehreren Netzknoten zu schaffen, bei denen jeweils OAM-Zellen ausgewertet werden.

Die Aufgabe wird durch ein Übertragungssystem der eingangs genannten Art dadurch gelöst,
daß ein Netzknoten wenigstens eine Auswertevorrichtung enthält, die
- zur Abspeicherung von den aus einem Paket entnommenen Zustandsinformationen in eine Tabelle vorgesehen ist und
- unabhängig von der Reihenfolge der empfangenen Pakete zur Ermittlung von aktuellen, verbindungsbezogenen Zuständen nach einer vorgegebenen Reihenfolge für jede Verbindung aus den ebenfalls in der Tabelle gespeicherten, bisher ermittelten Zuständen und den empfangenen, verbindungsbezogenen Zustandsinformationen vorgesehen ist.

Ein Netzknoten erhält erfindungsgemäß eine Auswertevorrichtung für eine Leitung, die ermittelt, welcher Typ eines Paketes oder Zelle (Zelltyp) vorliegt. Weitere Auswertevorrichtungen können innerhalb eines Netzknotens für weitere Leitungen vorhanden sein. Enthält ein Paket verbindungsbezogene Zustandsinformationen, so liegt eine OAM-Zelle vor. Solche Zustandsinformationen können beispielsweise AIS-Informationen oder RDI-Informationen im Informationsfeld einer Zelle sein. Die AIS-Information (AIS = alarm indication signal) gibt z.B. einen Leitungsbruch und die RDI-Information (RDI = remote defect indication) gibt z.B. an, daß in der Gegenrichtung ein Leitungsbruch vorhanden ist. Diese Zustandsinformationen und weitere Daten (VPI, VCI usw.) werden in einer Tabelle gespeichert.

Außer dieser aktuellen Zellbearbeitung wird in der Auswertevorrichtung eine Nachbearbeitung oder Hintergrundprozeß durchgeführt. Bei dieser Nachbearbeitung werden gespeicherte Daten aus der Tabelle für eine VP- oder VC-Verbindung entnommen und wenigstens ein aktueller Zustand berechnet. Ein solcher Zustand gibt z.B. an, daß ein Leitungsbruch aufgetreten ist. Voraussetzung dabei ist, daß eine solche Zustandsinformation (z.B. AIS-Information) von OAM-Zellen gemeldet worden ist. Sind für eine bestimmte VP- oder VC-Verbindung ein oder mehrere aktuelle Zustände ermittelt worden, werden erst die aktuellen Zustände aller anderen VP- und VC-Verbindungen ausgewertet, bevor die aktuellen Zustände der zuvor genannten, bestimmten VP- oder VC-Verbindung wieder ermittelt werden.

Bei der Berechnung der Zustände kann sich ergeben, daß OAM-Zellen von der Auswertevorrichtung erzeugt und gesendet werden müssen. Durch die oben angegebene Art der Nachverarbeitung werden Zellen einer bestimmten VP- oder VC-Verbindung in einem bestimmten zeitlichen Abstand abgesendet, wodurch sich ein regelmäßiger Zellenstrom ergibt und die Gefahr eines Zellenstaus verringert wird.

Zur Auswertung von nach dem asynchronen Transfermodus übertragenen Zellen enthält die Auswertevorrichtung eine Erkennungsschaltung wenigstens zur Erkennung des Zelltyps, des virtuellen Pfades (VP) und - falls vorhanden - der virtuellen Verbindung (VC) und eine Entnahmeschaltung.

Diese ist wenigstens bei bestimmten OAM-Zellen zur Entnahme von Zustandsinformationen und zur Weiterleitung der Zustandinformationen zur Tabelle vorgesehen.

Weiter enthält die Auswertevorrichtung eine Nachverarbeitungsschaltung, die jeweils periodisch zur Entnahme von auf eine Verbindung bezogene Daten aus der Tabelle, zur Ermittlung und zur Abspeicherung in der Tabelle von aktuellen, verbindungsbezogenen Zuständen und bei bestimmten Zuständen zur Weiterleitung eines Steuerbefehls an eine weitere in der Auswertevorrichtung enthaltene Erzeugungsschaltung zur Erzeugung von OAM-Zellen vorgesehen ist. Eine Periode ist gleich der Dauer für die Berechnung der Zustände aller Verbindungen. Das bedeutet, daß während einer Periode in äquidistanten Zeitabschnitten nacheinander für alle möglichen VP- und VC-Verbindungen die Nachverarbeitung durchgeführt wird.

In der Auswertevorrichtung ist eine Erzeugerschaltung vorhanden, die OAM-Zellen erzeugt. Diese Zellen werden entweder einem im Netzknoten enthaltenen Koppelfeld oder einer Leitung zugeführt. Die Zellen, welche der Leitung zugeführt werden sollen, müssen zuvor einem Multiplexer zugeleitet werden, der entweder Zellen von dem Koppelfeld oder Zellen von der Erzeugerschaltung erhält. Die Zellen von der Erzeugerschaltung sind priorisiert. Daher müssen gleichzeitig vom Koppelfeld eintreffende Zellen in einem in der Auswertevorrichtung enthaltenen Pufferspeicher zwischengespeichert werden. Außerdem enthält die Auswertevorrichtung einen weiteren Multiplexer, der entweder zur Weiterleitung von Zellen von der Entnahmeschaltung oder priorisierten Zellen von der Erzeugerschaltung zum Koppelfeld vorgesehen ist. Zur Zwischenspeicherung der Zellen von der Entnahmeschaltung ist in der Auswertevorrichtung ein weiterer Pufferspeicher vorgesehen. Aufgrund der regelmäßigen und kontrollierten Erzeugung der Zellen in der Erzeugerschaltung können die Pufferspeicher klein dimensioniert werden.

In einer Weiterbildung der Erfindung ist eine in der Auswertevorrichtung enthaltene Überwachungsschaltung wenigstens zur Überwachung vorgesehen, ob die angeschlossene Leitung einen Leitungsbruch aufweist, und zur Weiterleitung eines Leitungsbruches an die Nachverarbeitungsschaltung vorgesehen. Ein solcher Leitungsbruch wird von der Nachverarbeitungsschaltung auch berücksichtigt. Diese veranlaßt die Erzeugerschaltung OAM-Zellen mit AIS- oder RDI-Informationen zu erzeugen.

Die Tabelle enthält noch einen Eintrag zu jeder VC-Verbindung, der auf die zugehörige VP-Verbindung verweist. Hierdurch ist es auf einfache Art möglich, Zustände der VC-Verbindungen in Abhängigkeit von Zuständen der zugehörigen VP-Verbindung zu bilden.

Ein Ausführungsbeispiel der Erfindung wird nachstehend anhand der Zeichnungen näher erläutert. Es zeigen:
- Fig. 1: einen Teil eines Übertragungssystems mit Netzknoten und
- Fig. 2: einen etwas detaillierter dargestellten Netzknoten.

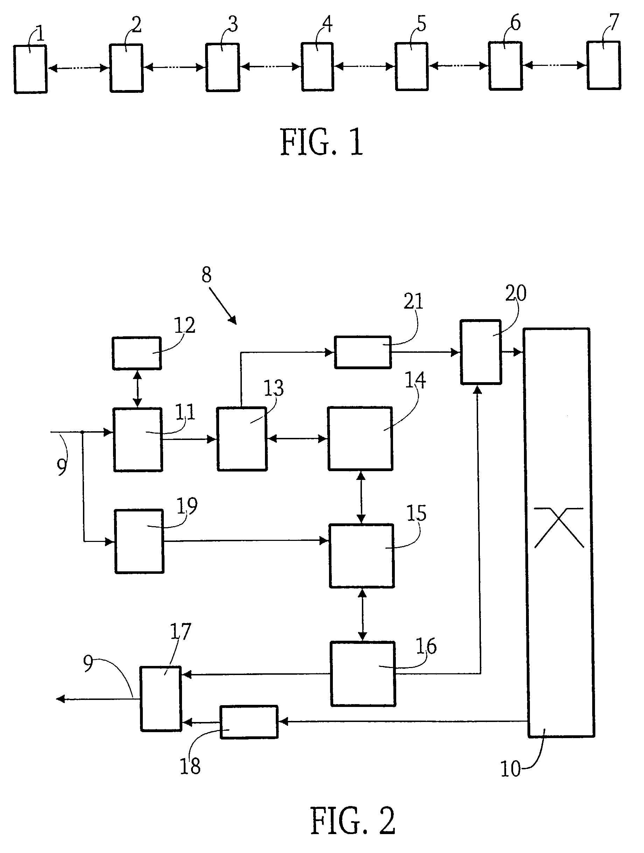

In der Fig. 1 ist ein Teil eines Übertragungssystems mit sieben Netzknoten 1 bis 7 dargestellt. Solche Netzknoten können z.B. Vermittlungsstellen, Cross-Connects oder Zwischenregeneratoren sein. Informationen werden im Übertragungssystem mit Hilfe von Paketen fester Länge (Zellen) nach dem asynchronen Transfermodus übertragen. Eine Zelle besteht aus einem 5 Byte langen Steuerinformationen enthaltenen Kopffeld und einem 48 Byte langen Informationsfeld. Die Zellen können zwischenzeitlich noch in einem synchronen Transportmodul (STM) transportiert werden. Ein synchroner Transportmodul ist Teil eines Signals nach dem Standard der synchronen digitalen Hierachie (SDH) oder nach dem Standard des synchronen optischen Netzes (SONET).

Zwischen den Netzknoten 1 und 7 kann z.B. eine virtuelle Verbindung oder auch ein virtueller Pfad aufgebaut werden. Eine virtuelle Verbindung wird als VC-Verbindung (virtual connection) bezeichnet. Mehrere VC-Verbindungen werden zu einem virtuellen Pfad zusammengefügt, was als VP-Verbindung (virtual path) bezeichnet wird. Eine VP-Verbindung wird durch eine virtuelle Pfadkennung VPI (virtual path identifier) und eine VC-Verbindung wird durch eine virtuelle Verbindungskennung VCI (virtual connection identifier) und die zugehörige virtuelle Pfadkennung VPI im Kopffeld einer Zelle gekennzeichnet. Diese Kennungen können in verschiedenen Netzknoten verändert werden, beispielsweise wenn eine Zelle aus dem Netz eines Systembetreibers in das Netz eines anderen Systembetreibers gelangt.

Zur Sicherstellung des Betriebes, der Signalisierung von Fehlerzuständen und dem Transport von Monitor-Informationen (z.B. bezüglich der Verfügbarkeit und der Leistungsfähigkeit des Systems) werden Zellen mit OAM-Informationen (OAM-Zellen) im Informationsfeld der Zelle zwischen den Netzknoten ausgetauscht (OAM = operation and maintenance). In den Netzknoten ist daher zur Auswertung solcher OAM-Zellen eine Auswertevorrichtung enthalten.

Eine Ausführungsform einer solchen Auswertevorrichtung 8 zeigt Fig. 2, die zwischen einer Leitung 9 und einem Koppelfeld 10 angeordnet ist. Statt eines Koppelfeldes kann auch ein Endgerät angeschlossen sein, wenn der Netzknoten sich am Ende der Verbindung befindet (z.B. Netzknoten 1 und 7 in Fig. 1). Die Auswertevorrichtung 8 enthält eine Erkennungsschaltung 11 und eine erste Tabelle 12, mit deren Hilfe die VP- und VC-Verbindungen und der Zellentyp bestimmt werden. Die Erkennungsschaltung 11 entnimmt dabei aus dem Kopffeld einer von der Leitung 9 zugeführten Zelle die virtuelle Verbindungskennung VCI und die virtuelle Pfadkennung VPI und führt diese der Tabelle 12 zu. Die Tabelle 12 liefert der Erkennungsschaltung 11 die VP-Verbindung und - falls vorhanden - eine zugehörige VC-Verbindung. Weiter enthält die Erkennungsschaltung 13 noch einen Decoder, der den Zellentyp anhand von Daten des Kopffeldes bestimmt. Dieser Decoder in der Erkennungsschaltung 11 wertet die virtuelle Pfadkennung VPI, die virtuelle Verbindungskennung VCI, eine Nutzlastkennung PTI (payload type identifier) und ein Bit im Kopffeld aus, das mit CLP (cell loss priority) bezeichnet wird und die Zellen-Priorität angibt.

Der Decoder ermittelt den Typ der Zelle gemäß folgender Tabelle:

| Zelltyp | VPI | VCI | PTI | CLP |
|---|---|---|---|---|
| Nutzdaten | XXX | >001F | 0xx | x |
| F4SEG | XXX | 0003 | 0x0 | x |
| F4ETE | XXX | 0004 | 0x0 | x |
| F5SEG | XXX | ZZZZ | 100 | x |
| F5ETE | XXX | ZZZZ | 101 | x |

Der Decoder stellt also fest, ob eine Nutzdatenzelle oder eine OAM-Zelle vom Typ F4SEG, F4ETE, F5SEG oder F5ETE vorliegt. Bei einem Zelltyp F4SEG oder F5SEG enthält die Zelle OAM-Informationen nur über einen bestimmten Abschnitt einer Verbindung. OAM-Informationen über die Ende-zu-Ende-Verbindung liegen bei den beiden anderen Zelltypen F4ETE oder F5ETE vor. Die Zelltypen F4SEG und F4ETE beziehen sich weiter auf eine VP-Verbindung und die Zelltypen F5SEG und F5ETE auf eine VC-Verbindung. Andere möglicherweise vorkommende Zelltypen können entweder ebenfalls als Nutzdaten oder aber als irrelevanter Zelltyp gekennzeichnet werden. Die in der Tabelle vorkommende Ziffer X stellt eine Hexadezimalzahl, die Ziffer x eine Binärzahl und die Ziffer Z eine Hexadezimalzahl mit Ausnahme von 0 dar. Die oben genannte Tabelle ist dem Standardisierungsvorschlag ITU-T I.610 entnommen.

Die Erkennungsschaltung 11 gibt die zwischengespeicherte Zelle, die von der Tabelle 12 gelieferten Daten und den vom Decoder erkannten Zelltyp an eine ebenfalls in der Auswertevorrichtung 8 enthaltene Entnahmeschaltung 13 weiter. Die Entnahmeschaltung 13 entnimmt nur dann Daten (Zustandsinformationen) aus dem Informationsfeld der empfangenen Zelle, wenn der Zelltyp vom Typ F4SEG, F4ETE, F5SEG oder F5ETE ist. In den anderen Fällen wird die in der Entnahmeschaltung 13 zwischengespeicherte Zelle ohne weitere Entnahme von Daten weitergeleitet.

Aus dem Informationsfeld einer Zelle werden in der Entnahmeschaltung 13 Zustandsinformationen, beispielsweise eine AIS-Information (AIS = alarm indication signal) oder eine RDI-Information (RDI = remote defect indication), gewonnen. Die AIS-Information gibt z.B. einen Leitungsbruch und die RDI-Information gibt z.B. an, daß in der Gegenrichtung ein Leitungsbruch vorhanden ist. Die Entnahmeschaltung 13 ist mit einer Tabelle 14 gekoppelt, die gesonderte Einträge für alle VP- und VC-Verbindungen enthält. Die Entnahmeschaltung 13 entnimmt aus der Tabelle 14 bestimmte Daten, die unter der VP- und VC-Verbindung der eingetroffenen Zelle abgespeichert sind. Jeder VP- und VC-Verbindung werden Zustandsinformationen zugeordnet, ob eine AIS-Information, RDI-Information oder andere Informationen angekommen sind. Abhängig von einer gegebenfalls vorliegenden AIS-Information oder RDI-Information, VPI, VCI, PTI, dem Zelltyp und weiteren Informationen werden die Daten der VP- und VC-Verbindung verarbeitet und wieder in die Tabelle 14 zurückgeschrieben. Falls keine VC-Verbindung existiert (Netzknoten nur für VP-Verbindungen), entfallen die für die VC-Verbindungen notwendigen Bearbeitungsschritte.

Mit der Tabelle 14 ist eine Nachverarbeitungsschaltung 15 gekoppelt, die ebenso wie die Tabelle 14 Bestandteil der Auswertevorrichtung 8 ist. Die Nachverarbeitungsschaltung 15 entnimmt periodisch auf eine VP- oder VC-Verbindung bezogene Daten aus der Tabelle 14 und verarbeitet diese. Das bedeutet, daß in der Nachverarbeitungsschaltung 15 jeweils die Daten der gesamten VP- und VC-Verbindungen nacheinander bearbeitet werden.

Es sei beispielsweise vorausgesetzt, daß zwei VP-Verbindungen mit VPI = 1 und VPI = 2 und drei VC-Verbindungen mit VPI = 1 / VCI = 10, VPI = 1 / VCI = 11 und VPI = 2 / VCI = 12 existieren. In der Tabelle 14 sind dann z.B. folgende Einträge vorhanden:

| Adresse | Art | VPI | VCI | VP_REF | ... |
|---|---|---|---|---|---|
| 0 | VP | 1 | - | - | |
| 1 | VP | 2 | - | - | |
| 2 | VC | 1 | 10 | 0 | |
| 3 | VC | 1 | 11 | 0 | |
| 4 | VC | 2 | 12 | 1 | |
| : | | | | | |
| : | | | | | |
| : | | | | | |

In dieser Tabelle ist jede Verbindung einer Adresse zugeordnet. Die Tabelle enthält zumindestens die Art der Verbindung (VP- oder VC-Verbindung), VPI, VCI und einen Referenzeintrag VP_REF, der bei einer VC-Verbindung die Adresse der zugehörigen VP-Verbindung kennzeichnet. Anstelle einer gemeinsamen Tabelle können auch zwei getrennte Tabellen einerseits für alle VP-Verbindungen und andererseits für alle VC-Verbindungen verwendet werden.

In der Nachverarbeitungsschaltung 15 werden z.B. zuerst die in der Tabelle 14 zwischengespeicherten Daten der VP-Verbindung mit VPI = 1 bearbeitet und nach der Bearbeitung der Tabelle 14 zurückgegeben. Die VP-Verbindung mit VPI = 1 wird erst dann wieder von der Nachverarbeitungsschaltung 15 bearbeitet, wenn diese die VP-Verbindung mit VPI = 2 und die VC-Verbindungen mit VPI = 1 / VCI 10, VPI = 1 / VCI = 11 und VPI = 2 / VCI = 12 sowie alle weiteren Einträge in der Tabelle 14 bearbeitet hat.

In der Nachverarbeitungsschaltung 15 wird beispielsweise geprüft, ob ein Leitungsbruch, eine AIS-Information usw. vorliegt und ob dies über die Leitung 9 einem Netzknoten mittels einer OAM-Zelle mit einer RDI-Information oder über das Koppelfeld 10 mittels einer OAM-Zelle mit einer AIS-Information gemeldet werden soll.

Die Feststellung z.B. eines Leitungsbruches auf der Leitung 9 stellt eine Überwachungsschaltung 19 fest, die dann dies der Nachverarbeitungsschaltung 15 meldet. Es besteht auch die Möglichkeit einen Fehler der Leitung 9 durch eine externe Vorrichtung feststellen und melden zu lassen. OAM-Zellen mit einer AIS- oder RDI-Information erzeugt eine Erzeugungsschaltung 16, die dazu die Anweisung von der Nachverarbeitungsschaltung 15 erhält. Die Erzeugungsschaltung 16 bildet dann eine OAM-Zelle. Das Kopffeld dieser Zelle wird mit den entsprechenden Informationen aus der Tabelle 14 gefüllt und die AIS- oder RDI-Information in das Informationsfeld der OAM-Zelle eingefügt.

Enthält die neu gebildete OAM-Zelle eine RDI-Information, wird diese von der Erzeugungsschaltung 16 zu einem Multiplexer 17 gegeben, der die OAM-Zelle sofort in den Zellenstrom der Leitung 9 einfügt. Ein entsprechender Steuerbefehl für den Multiplexer 17 erzeugt die Erzeugungsschaltung 16. Sollten zwischenzeitlich Zellen vom Koppelfeld 10 zur Leitung 9 gesendet worden sein, so werden diese in einem Pufferspeicher 18 zwischengespeichert und später über den Multiplexer 17 zur Leitung 9 gegeben. Eine OAM-Zelle mit einer AIS-Information wird dem Koppelfeld 10 über einen weiteren von der Erzeugungsschaltung 16 gesteuerten Multiplexer 20 zugeführt. Zellen von der Entnahmeschaltung 13 werden in einem Pufferspeicher 21 zwischengespeichert, welcher zwischen Entnahmeschaltung 13 und Multiplexer 20 angeordnet ist. Der Pufferspeicher 21 kann auch mit dem Eingang der Erkennungsschaltung 11 anstatt mit dem Multiplexer 20 gekoppelt sein.

In der Entnahmeschaltung 13 und der Nachverarbeitungsschaltung 15 laufen mehrere verbindungsbezogene, unabhängige Prozesse ab. Dabei finden Zugriffe auf die Tabelle 14 statt. Wie oben ausgeführt, werden in der Tabelle Zustandinformationen und weiter aus den Zustandsinformationen ermittelte Zustände (z.B. AIS-Zustand der Verbindung) abgespeichert.

Ein Prozeß dient dazu, die AIS-Informationen zu verarbeiten. In der Tabelle 14 ist eine Speicherzelle pro Verbindung vorhanden, die mit AISD bezeichnet wird und angibt, ob diese Verbindung sich im AIS-Zustand (AISD > 0) befindet. AISD stellt eine binär codierte ganze Zahl dar. Der AIS-Zustand wird eingenommen, falls eine einzige OAM-Zelle mit einer AIS-Information eingetroffen ist. Dies stellt die Entnahmeschaltung 13 fest und setzt in der Tabelle 14 die Speicherzelle AISD für diese Verbindung z.B. auf den Wert 6. Der AIS-Zustand wird verlassen, wenn eine einzige Zelle dieser Verbindung eintrifft, die Nutzdaten enthält. Dies stellt ebenfalls die Entnahmeschaltung 13 fest, welche in diesem Fall die Speicherzelle AISD auf den Wert 0 zurücksetzt. Der AIS-Zustand wird ebenfalls verlassen, wenn für eine vorgegebene Zeitspanne keine weitere OAM-Zelle mit einer AIS-Information für diese Verbindung eingetroffen ist. Diese Zeitspanne beträgt gemäß des gegenwärtigen Standardisierungsvorschlages (ITU-T I.610) 2,5s ± 0,5s. Alle anderen nachfolgenden Zeitbedingungen beziehen sich auf diesen Standardisierungsvorschlag ITU-T I.610. Um dieses zu erreichen dekremementiert die Nachverarbeitungsschaltung 15 den Wert von AISD für die aktuell zu verarbeitende Verbindung mit einer festgelegten Periode (in diesem Ausführungsbeispiel soll die Periode 0,5s betragen). In einer Periode werden alle Verbindungen in der Nachverarbeitungsschaltung 15 verarbeitet. Der AIS-Zustand wird beispielsweise einem hier nicht näher dargestellten Netzwerkmanagement gemeldet. Diese obenstehend geschilderte Verfahrensweise läßt sich durch den folgenden Ablauf darstellen:

Ablauf in der Entnahmeschaltung 13 für VP-Verbindung :
Wenn Zelltyp F4ETE mit AIS-Information vorliegt, dann:
AISD = 6;
sonst, wenn Nutzzelle vorliegt:
AISD = 0;

Ablauf in der Entnahmeschaltung 13 für VC-Verbindung :
Wenn Zelltyp F5ETE mit AIS-Information vorliegt, dann:
AISD = 6;
sonst, wenn Nutzzelle vorliegt:
AISD = 0;

Ablauf in der Nachverarbeitungsschaltung 15:
Wenn AISD > 0, dann:
AISD = AISD - 1;
sonst:
AISD = 0;

Ein zweiter Prozeß dient dazu, die RDI-Informationen in der Tabelle 14 auszuwerten. In der Tabelle 14 ist eine Speicherzelle pro Verbindung vorhanden, die mit RDID bezeichnet wird und angibt, ob diese Verbindung sich im RDI-Zustand (RDID > 0) befindet. RDID stellt eine binär codierte ganze Zahl dar. Der RDI-Zustand wird eingenommen, falls eine einzige OAM-Zelle mit einer RDI-Information eingetroffen ist. Dies stellt die Entnahmeschaltung 13 fest und setzt in der Tabelle 14 die Speicherzelle RDID für diese Verbindung z.B. auf den Wert 6. Der RDI-Zustand wird verlassen, wenn für eine vorgegebene Zeitspanne keine weitere OAM-Zelle mit einer RDI-Information für diese Verbindung eingetroffen ist. Diese Zeitspanne beträgt, wie oben schon gezeigt, 2,5s ± 0,5s. Um dieses zu erreichen dekremementiert die Nachverarbeitungsschaltung 15 den Wert von RDID mit einer festgelegten Periode (in diesem Ausführungsbeispiel soll die Periode 0,5s betragen). Der RDI-Zustand wird beispielsweise dem Netzwerkmanagement gemeldet. Diese obenstehend geschilderte Verfahrensweise läßt sich durch den folgenden Ablauf darstellen:

Ablauf in der Entnahmeschaltung 13 für VP-Verbindung:
Wenn Zelltyp F4ETE mit RDI-Information vorliegt, dann:
RDID = 6;

Ablauf in der Entnahmeschaltung 13 für VC-Verbindung:
Wenn Zelltyp F5ETE mit RDI-Information vorliegt, dann:
RDID = 6;

Ablauf in der Nachverarbeitungsschaltung 15:
Wenn RDID > 0, dann:
RDID = RDID - 1;
sonst:
RDID = 0;

Ein dritter Prozeß dient dazu, OAM-Zellen mit einer AIS-Information zu erzeugen. Eine solche OAM-Zelle wird nur an einem Netzknoten erzeugt, der nicht am Anfang- oder Endpunkt einer VP- oder VC-Verbindung sitzt (Netzknoten 2 bis 6 in Fig. 1). In diesem Fall liegt ein entsprechender Eintrag in der Tabelle 14 vor. Die Erzeugung der OAM-Zellen wird dann durchgeführt, wenn beispielsweise ein Leitungsbruch auf der Leitung 9 festgestellt worden ist oder bei einer VC-Verbindung ein AIS-Zustand der zugehörigen VP-Verbindung erkannt worden ist. Hierbei sei vorausgesetzt, daß zur Aussendung einer OAM-Zelle mit einer AIS-Information maximal 0,5s zur Verfügung stehen und aufeinanderfolgende OAM-Zellen mit einem zeitlichen Abstand von 1s ausgesendet werden müssen. Daher wird als Periode für die Nachverarbeitung ebenfalls die Dauer von 0,5s gewählt.

Ferner wird in der Tabelle 14 ein weiterer Zustand pro Verbindung abgespeichert, der mit AISN bezeichnet wird und angibt, ob für diese Verbindung eine OAM-Zelle mit einer AIS-Information von der Erzeugungsschaltung 16 erzeugt werden soll. AISN stellt eine binär codierte ganze Zahl dar. Der Prozeß läßt sich durch den folgenden beispielhaften Ablauf für die Nachverarbeitungsschaltung 15 beschreiben:

### Ablauf in der Nachverarbeitungsschaltung 15:

Wenn entweder ein Leitungsbruch oder bei einer VC-Verbindung ein AIS-Zustand der zugehörigen VP-Verbindung (AISD(VP_REF) > 0) vorliegt, dann:

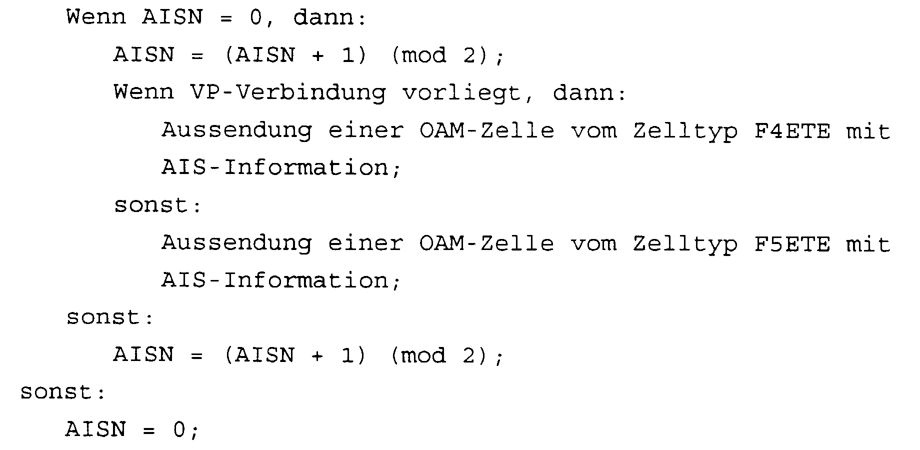

Bei einem Leitungsbruch oder bei einer VC-Verbindung mit dem Wert von AISD(VP_REF) > 0, wird geprüft, ob AISN gleich 0 ist. Zur Bestimmung von AISD(VP_REF) wird auf den entsprechenden Tabelleneintrag, auf den VP_REF verweist, zugegriffen und der zugehörige Wert von AISD der entsprechenden VP-Verbindung gelesen.

Wenn AISN gleich 0 ist, wird AISN Modulo 2 inkrementiert und eine OAM-Zelle gebildet. Wenn eine VP-Verbindung vorliegt, weist die Nachverarbeitungsschaltung 15 die Erzeugungsschaltung 16 an, eine OAM-Zelle vom Zelltyp F4ETE mit einer AIS-Information zu erzeugen. Sonst - bei einer VC-Verbindung - wird die Erzeugungsschaltung 16 veranlaßt eine OAM-Zelle vom Zelltyp F5ETE mit einer AIS-Information zu erzeugen.

Ist AISN nicht gleich 0 wird AISN Modulo 2 inkrementiert. Eine Erzeugung einer OAM-Zelle findet nicht statt. Dies dient dazu den zeitlichen Abstand von 1s zwischen zwei aufeinanderfolgenden OAM-Zellen mit einer AIS-Information einzuhalten. Falls für die Periode nicht 0,5s gewählt wird, muß der Moduloperator entsprechend geändert werden.

Sind die Bedingungen zur Erzeugung einer OAM-Zelle nicht gegeben, so wird AISN auf 0 gesetzt.

Ein weiterer Prozeß dient dazu, OAM-Zellen mit einer RDI-Information zu erzeugen. Eine solche OAM-Zelle wird nur an einem Netzknoten erzeugt, der am Anfang- oder Endpunkt einer VP- oder VC-Verbindung sitzt (Netzknoten 1 und 7 in Fig. 1). In diesem Fall liegt ebenfalls ein entsprechender Eintrag in der Tabelle 14 vor. Die Erzeugung einer OAM-Zelle wird dann durchgeführt, wenn beispielsweise ein Leitungsbruch auf der Leitung 9 festgestellt worden ist oder für diese Verbindung ein AIS-Zustand (AISD > 0) erkannt worden ist oder bei einer VC-Verbindung ein AIS-Zustand der zugehörigen VP-Verbindung erkannt worden ist. Hierbei sei vorausgesetzt, daß zur Aussendung einer OAM-Zelle mit einer RDI-Information maximal 0,5s zur Verfügung stehen und aufeinanderfolgende OAM-Zellen mit einem zeitlichen Abstand von 1s ausgesendet werden müssen. Daher wird als Periode für die Nachverarbeitung ebenfalls die Dauer von 0,5s gewählt.

Ferner ist in der Tabelle 14 eine Speicherzelle pro Verbindung für den Zustand vorhanden, der mit RDIN bezeichnet wird und angibt, ob für diese Verbindung eine OAM-Zelle mit einer RDI-Information von der Erzeugungsschaltung 16 erzeugt werden soll. RDIN stellt eine binär codierte ganze Zahl dar. Dieser Prozeß läßt sich durch den folgenden beispielhaften Ablauf für die Nachverarbeitungsschaltung 15 beschreiben:

### Ablauf in der Nachverarbeitungsschaltung 15:

Wenn entweder ein Leitungsbruch oder ein AIS-Zustand (AISD > 0) oder bei einer VC-Verbindung ein AIS-Zustand der zugehörigen VP-Verbindung (AISD(VP_REF) > 0) vorliegt, dann:

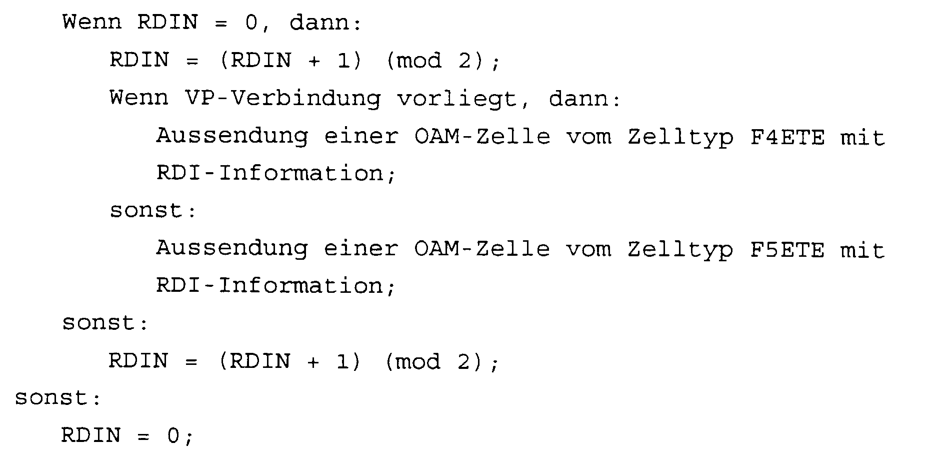

Bei einem Leitungsbruch oder einem AIS-Zustand (AISD > 0) oder bei einer VC-Verbindung mit dem Wert von AISD(VP_REF) > 0, wird geprüft, ob RDIN gleich 0 ist. Wenn RDIN gleich 0 ist, wird RDIN Modulo 2 inkrementiert und eine OAM-Zelle gebildet. Wenn eine VP-Verbindung vorliegt, weist die Nachverarbeitungsschaltung 15 die Erzeugungsschaltung 16 an, eine OAM-Zelle vom Zelltyp F4ETE mit einer RDI-Information zu erzeugen. Sonst - bei einer VC-Verbindung - wird die Erzeugungsschaltung 16 veranlaßt eine OAM-Zelle vom Zelltyp F5ETE mit einer RDI-Information zu erzeugen.

Ist RDIN nicht gleich 0 wird RDIN Modulo 2 inkrementiert. Eine Erzeugung einer OAM-Zelle findet nicht statt. Dies dient dazu den zeitlichen Abstand von 1s zwischen zwei aufeinanderfolgenden OAM-Zellen mit einer RDI-Information einzuhalten.

Sind die Bedingungen zur Erzeugung einer OAM-Zelle nicht gegeben, so wird RDIN auf 0 gesetzt.

Der gleiche Ablauf kann parallel für VP- und VC-Verbindungen mit dem Zelltyp F4SEG und F5SEG durchgeführt werden. Außerdem könnten von der Entnahmeschaltung 13 und der Nachverarbeitungsschaltung 15 weitere Zustandsinformationen zur Erkennung anderer Fehlerarten verarbeitet werden, wie sie z.B. der Continuity-Check-Mechanismus bietet.

## Patentansprüche

1. Übertragungssystem mit mehreren Netzknoten (1 bis 7), die jeweils zum Empfang und zur Sendung von Paketen mit verbindungsbezogenen Zustandsinformationen des Übertragungssystems vorgesehen sind,
dadurch gekennzeichnet,
daß ein Netzknoten (1 bis 7) wenigstens eine Auswertevorrichtung (8) enthält, die
- zur Abspeicherung von den aus einem Paket entnommenen Zustandsinformationen in eine Tabelle (14) vorgesehen ist und
- unabhängig von der Reihenfolge der empfangenen Pakete zur Ermittlung von aktuellen, verbindungsbezogenen Zuständen nach einer vorgegebenen Reihenfolge für jede Verbindung aus den ebenfalls in der Tabelle (14) gespeicherten, bisher ermittelten Zuständen und den empfangenen, verbindungsbezogenen Zustandsinformationen vorgesehen ist.

2. Übertragungssystem nach Anspruch 1,
dadurch gekennzeichnet,
daß die Auswertevorrichtung (8) zur Auswertung von nach dem asynchronen Transfermodus übertragenen Zellen vorgesehen ist und
daß die Auswertevorrichtung (8) eine Erkennungsschaltung (11) wenigstens zur Erkennung des Zelltyps, des virtuellen Pfades (VP) und - falls vorhanden - der virtuellen Verbindung (VC) und eine Entnahmeschaltung (13) enthält, die wenigstens bei bestimmten OAM-Zellen zur Entnahme von Zustandsinformationen und zur Weiterleitung der Zustandinformationen zur Tabelle (14) vorgesehen ist.

3. Übertragungssystem nach Anspruch 2,
dadurch gekennzeichnet,
daß eine in der Auswertevorrichtung (8) enthaltene Nachverarbeitungsschaltung (15) jeweils
- periodisch zur Entnahme von auf eine Verbindung bezogenen Daten aus der Tabelle (14),
- zur Ermittlung und zur Abspeicherung in der Tabelle (14) von aktuellen, verbindungsbezogenen Zuständen und
- bei bestimmten Zuständen zur Weiterleitung eines Steuerbefehls an eine weitere in der Auswertevorrichtung (8) enthaltene Erzeugungsschaltung zur Erzeugung von OAM-Zellen vorgesehen ist und
daß eine Periode gleich der Dauer für die Berechnung der Zustände aller Verbindungen ist.

4. Übertragungssystem nach Anspruch 3,
dadurch gekennzeichnet,
daß die Auswertevorrichtung (8) einen Multiplexer (17) enthält, der entweder zur Weiterleitung von Zellen von einem im Netzknoten (1 bis 7) enthaltenen Koppelfeld (10) oder priorisierten Zellen von der Erzeugerschaltung (16) vorgesehen ist und
daß ein in der Auswertevorrichtung (8) enthaltener Pufferspeicher (18) zur Zwischenspeicherung der Zellen vom Koppelfeld (10) vorgesehen ist,
daß die Auswertevorrichtung (8) einen weiteren Multiplexer (20) enthält, der entweder zur Weiterleitung von Zellen von der Entnahmeschaltung (13) oder priorisierten Zellen von der Erzeugerschaltung (16) vorgesehen ist und daß ein in der Auswertevorrichtung (8) enthaltener weiterer Pufferspeicher (21) zur Zwischenspeicherung der Zellen von der Entnahmeschaltung (13) vorgesehen ist.

5. Übertragungssystem nach einem der Ansprüche 2 bis 4,
dadurch gekennzeichnet,
daß eine in der Auswertevorrichtung (8) enthaltene Überwachungsschaltung (19) wenigstens zur Überwachung vorgesehen ist, ob die angeschlossene Leitung (9) einen Leitungsbruch aufweist, und zur Weiterleitung eines Leitungsbruches an die Nachverarbeitungsschaltung (15) vorgesehen ist.

6. Übertragungssystem nach einem der Ansprüche 1 bis 5,
dadurch gekennzeichnet,
daß die Tabelle (14) zu jeder VC-Verbindung einen Verweis auf die zugehörige VP-Verbindung enthält.
